(19) Europäisches Patentamt
European Patent Office
Office européen des brevets

(11) Veröffentlichungsnummer: **0 058 863**
**B1**

# (12) EUROPÄISCHE PATENTSCHRIFT

(45) Veröffentlichungstag der Patentschrift: **23.01.85**

(51) Int. Cl.[4]: **C 09 B 23/06**

(21) Anmeldenummer: **82100892.7**

(22) Anmeldetag: **08.02.82**

(54) **Verfahren zur Herstellung von Trimethinfarbstoffen.**

(30) Priorität: **17.02.81 DE 3105778**

(43) Veröffentlichungstag der Anmeldung: **01.09.82 Patentblatt 82/35**

(45) Bekanntmachung des Hinweises auf die Patenterteilung: **23.01.85 Patentblatt 85/4**

(84) Benannte Vertragsstaaten: **CH DE FR GB IT LI**

(56) Entgegenhaltungen:
**DE - C - 599 560**
**FR - A - 775 578**
**FR - A - 1 520 821**

(73) Patentinhaber: **BAYER AG, Konzernverwaltung RP Patentabteilung, D-5090 Leverkusen 1 Bayerwerk (DE)**

(72) Erfinder: **Raue, Roderich, Dr., Berta-von-Suttner-Strasse 48, D-5090 Leverkusen 1 (DE)**

EP 0 058 863 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist ein Verfahren zur Herstellung von Trimethinfarbstoffen der allgemeinen Formel

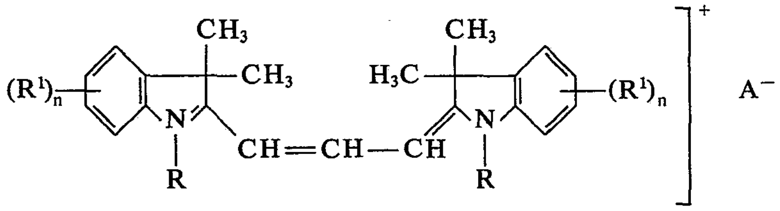

(I)

worin

| | |
|---|---|
| R | für einen $C_1$- bis $C_4$-Alkylrest, |
| $R^1$ | für Wasserstoff, $C_1$- bis $C_4$-Alkyl, Benzyl, Cyclohexyl, $C_1$- bis $C_4$-Alkoxy, Benzyloxy, Phenoxy, Halogen, Trifluormethyl, Acetylamino, Carbonsäure-$C_1$- bis -$C_4$-alkylester, gegebenenfalls durch $C_1$- bis $C_4$-Alkyl und/oder Phenyl substituiertes Carbonamid, $C_1$- bis $C_4$-Alkylsulfonyl, Phenylsulfonyl, Cyan, Nitro, Benzoxazol-2-yl, Benzimidazol-2-yl, Benzthiazol-2-yl und gegebenenfalls durch $C_1$- bis $C_4$-Alkyl mono- oder disubstituiertes Sulfonamid oder |
| zwei Reste $R^1$ | für einen annellierten Benzolring stehen, |
| n | 1 bis 4 und |
| $A^-$ | einen anionischen Rest bedeuten, |

dadurch gekennzeichnet, daß man ein Alkalisalz der Ameisensäure zunächst mit einem Gemisch aus Essigsäure und Essigsäureanhydrid im Gewichtsverhältnis 40 : 60 bis 60 : 40 zur Umsetzung bringt und dann mit Indolinverbindungen der allgemeinen Formel

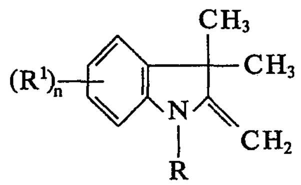

(II)

in welcher

R, $R^1$ und n die oben angegebene Bedeutung haben,

umsetzt.

Bevorzugt wird die Reaktion bei 40—80°C während 10—30 h durchgeführt.

Die in den Formeln enthaltenen aliphatischen und aromatischen Reste können durch nichtionische Reste substituiert sein, vorzugsweise durch Hydroxyl, $C_1$- bis $C_4$-Alkyl, $C_1$- bis $C_4$-Alkoxy, $C_1$- bis $C_4$-Acyloxy, Chlor, Brom, Cyan oder $C_1$- bis $C_4$-Alkylsulfonreste.

Geeignete gegebenenfalls substituierte $C_1$- bis $C_4$-Alkylreste sind:

Methyl, Ethyl, Propyl und Butyl, Cyanethyl, Methoxyethyl, Ethoxyethyl, Chlorethyl, $\beta$-Hydroxyethyl, $\beta$-Hydroxypropyl und $\beta,\gamma$-Dihydroxypropyl.

Geeignete gegebenenfalls substituierte $C_1$- bis $C_4$-Alkoxyreste sind:

Methoxy, Ethoxy, Propoxy, Butoxy, Methoxyethoxy, Ethoxyethoxy, Butoxyethoxy und Hydroxyethoxy.

Geeignete $C_1$- bis $C_4$-Acyloxyreste sind:

Acetoxy und Propionyloxy.

Geeignete ggf. substituierte Phenylreste sind:

Phenyl, 4-Chlor-phenyl, 2-Brom-phenyl, 4-Methoxy-phenyl, 2-Methoxy-phenyl, 4-Ethoxy-phenyl und 2-Ethoxy-phenyl.

Als Anionen eignen sich anorganische und organische Säurereste, soweit sie nicht die Löslichkeit der Farbstoffe nachteilig beeinflussen.

Das erfindungsgemäße Verfahren ist insbesondere geeignet zur Herstellung von Farbstoffen der allgemeinen Formel

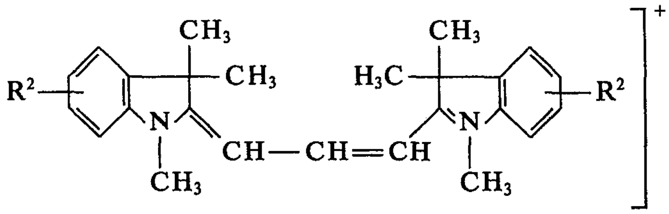 $A^-$ (III)

in welcher

$R^2$ für Wasserstoff, Chlor, Methyl, Methoxy oder Ethoxy steht und
$A^-$ einen anionischen Rest bedeutet.

Als Alkalisalze der Ameisensäure eignen sich insbesondere Natriumformiat und Kaliumformiat. Geeignete Indolinverbindungen der Formel II sind:

1,3,3-Trimethyl-2-methylen-2,3-dihydro-indol,
1,3,3,5-Tetramethyl-2-methylen-2,3-dihydro-indol,
1,3,3-Trimethyl-5-chlor-2-methylen-2,3-dihydro-indol,
1,3,3-Trimethyl-5-methoxy-2-methylen-2,3-dihydro-indol,
1,3,3-Trimethyl-5-carbomethoxy-2-methylen-2,3-dihydro-indol,
1,3,3-Trimethyl-5-carboethoxy-2-methylen-2,3-dihydro-indol,
1,3,3-Trimethyl-5-cyclohexyl-2-methylen-2,3-dihydro-indol,
1,3,3-Trimethyl-5-benzyl-2-methylen-2,3-dihydro-indol,
1,3,3-Trimethyl-5-nitro-2-methylen-2,3-dihydro-indol,
1,3,3,7-Tetramethyl-2-methylen-2,3-dihydro-indol,
1,3,3-Trimethyl-5-trifluormethyl-2-methylen-2,3-dihydro-indol,
1,3,3-Trimethyl-7-methoxy-2-methylen-2,3-dihydro-indol,
1,3,3-Trimethyl-7-chlor-2-methylen-2,3-dihydro-indol,
1-Ethyl-3,3-dimethyl-2-methylen-2,3-dihydro-indol,
1-Ethyl-3,3,5-trimethyl-2-methylen-2,3-dihydro-indol,
1-Ethyl-3,3-dimethyl-5-chlor-2-methylen-2,3-dihydro-indol,
1-Ethyl-3,3-dimethyl-5-methoxy-2-methylen-2,3-dihydro-indol,
1-Ethyl-3,3-dimethyl-5-carbomethoxy-2-methylen-2,3-dihydro-indol,
1-Ethyl-3,3-dimethyl-5-carboethoxy-2-methylen-2,3-dihydro-indol,
1-Ethyl-3,3,7-trimethyl-5-cyclohexyl-2-methylen-2,3-dihydro-indol,
1-Ethyl-3,3-dimethyl-5-benzyl-2-methylen-2,3-dihydro-indol,
1-Ethyl-3,3-dimethyl-5-nitro-2-methylen-2,3-dihydro-indol,
1,3,3-Trimethyl-5-benzyloxy-2-methylen-2,3-dihydro-indol,
1-Ethyl-3,3-dimethyl-5-benzyloxy-2-methylen-2,3-dihydro-indol,
1,3,3-Trimethyl-7-benzyl-2-methylen-2,3-dihydro-indol,
1,3,3-Trimethyl-4-benzyloxy-2-methylen-2,3-dihydro-indol,
1,3,3-Trimethyl-6-benzyloxy-2-methylen-2,3-dihydro-indol,
1,3,3-Trimethyl-7-benzyloxy-2-methylen-2,3-dihydro-indol,
1,3,3-Trimethyl-5-(p-methyl-benzyloxy)-2-methylen-2,3-dihydro-indol,
1,3,3-Trimethyl-5-(o-methyl-benzyloxy)-2-methylen-2,3-dihydro-indol,
1,3,3-Trimethyl-7-(p-chlor-benzyloxy)-2-methylen-2,3-dihydro-indol,
1,3,3-Trimethyl-5-methyl-7-benzyloxy-2-methylen-2,3-dihydro-indol,
1,3,3-Trimethyl-4-methoxy-5-benzyloxy-2-methylen-2,3-dihydro-indol,
1,3,3-Trimethyl-6-methoxy-5-benzyloxy-2-methylen-2,3-dihydro-indol,
1,3,3,5-Tetramethyl-4-benzyloxy-2-methylen-2,3-dihydro-indol,
1,3,3,5-Tetramethyl-6-benzyloxy-2-methylen-2,3-dihydro-indol,
1,3,3-Trimethyl-7-(p-methyl-benzyloxy)-2-methylen-2,3-dihydro-indol,
1,3,3-Trimethyl-7-(o-chlor-benzyloxy)-2-methylen-2,3-dihydro-indol,
1,3,3-Trimethyl-5-benzyloxy-7-methyl-2-methylen-2,3-dihydro-indol,
1,3,3,5-Tetramethyl-7-(p-methyl-benzyloxy)-2-methylen-2,3-dihydro-indol,
1,3,3-Trimethyl-5-methoxy-2-methylen-2,3-dihydro-indol,
1,3,3-Trimethyl-7-phenoxy-2-methylen-2,3-dihydro-indol,
1,3,3-Trimethyl-5-(4-methyl-phenoxy)-2-methylen-2,3-dihydro-indol,
1,3,3-Trimethyl-5-(4-methoxy-phenoxy)-2-methylen-2,3-dihydro-indol,
1,3,3-Trimethyl-7-(4-methoxy-phenoxy)-2-methylen-2,3-dihydro-indol,
1,3,3-Trimethyl-5-(4-chlor-phenoxy)-2-methylen-2,3-dihydro-indol,
1,3,3-Trimethyl-7-(3-methyl-phenoxy)-2-methylen-2,3-dihydro-indol,

1,3,3-Trimethyl-5-(3-methoxy-phenoxy)-2-methylen-2,3-dihydro-indol,
1,3,3-Trimethyl-6,7-benzo-2-methylen-2,3-dihydro-indol,
1,3,3-Trimethyl-5-fluor-2-methylen-2,3-dihydro-indol,
1,3,3-Trimethyl-5-ethoxy-2-methylen-2,3-dihydro-indol,
1,3,3-Trimethyl-7-ethoxy-2-methylen-2,3-dihydro-indol,
1,3,3-Trimethyl-5-cyan-2-methylen-2,3-dihydro-indol,
1,3,3-Trimethyl-5-acetylamino-2-methylen-2,3-dihydro-indol,
1,3,3-Trimethyl-5-methylsulfonyl-2-methylen-2,3-dihydro-indol,
1,3,3-Trimethyl-5-phenylsulfonyl-2-methylen-2,3-dihydro-indol,
1,3,3-Trimethyl-5-sulfonamido-2-methylen-2,3-dihydro-indol,
1,3,3-Trimethyl-5-(carbonsäure-N-ethylanilid)-2-methylen-2,3-dihydro-indol,
1,3,3-Trimethyl-7-ethyl-2-methylen-2,3-dihydro-indol,
1,3,3-Trimethyl-5-chlor-7-methoxy-2-methylen-2,3-dihydro-indol,
1,3,3-Trimethyl-4-chlor-7-methoxy-2-methylen-2,3-dihydro-indol,
1,3,3-Trimethyl-4,6-dicarbomethoxy-2-methylen-2,3-dihydro-indol,
1,3,3-Trimethyl-4,5-dichlor-7-methoxy-2-methylen-2,3-dihydro-indol,
1,3,3-Trimethyl-5-chlor-4,7-dimethoxy-2-methylen-2,3-dihydro-indol,
1,3,3,4,5,7-Hexamethyl-2-methylen-2,3-dihydro-indol und
1,3,3,4,6,7-Hexamethyl-2-methylen-2,3-dihydro-indol.

Man erhält die Trimethinfarbstoffe nach diesem Verfahren in hoher Ausbeute und in besonders reiner Form. Dadurch ist es möglich, aus dem Kondensationsansatz durch Zusatz von Wasser zur Zerstörung des restlichen Essigsäureanhydrids ohne Isolierung des Farbstoffes eine stabile gebrauchsfertige Farbstofflösung herzustellen.

Es ist anzunehmen, aber nicht Gegenstand dieser Erfindung, daß sich bei der Umsetzung von Essigsäureanhydrid und Natriumformiat als Zwischenprodukt das instabile, aber sehr reaktionsfähige gemischte Anhydrid aus Essigsäure und Ameisensäure bildet.

In der DE-PS 410 487 ist ein Verfahren zur Herstellung von Trimethinfarbstoffen durch Umsetzung von $\alpha$-Methyl-indoleniumsalzen mit Orthoameisensäureester in Gegenwart von Essigsäureanhydrid, Chlorzink, Nitrobenzol oder Tetrachlorethan bei höherer Temperatur beschrieben. Hierbei bildet sich als Nebenprodukt Essigester und Methyl- bzw. Ethyljodid. In der DE-PS 415 534 wird die Kondensation mit Natriumformiat anstelle von Orthoameisensäureester beschrieben. Da die Kondensation in Essigsäureanhydrid vorgenommen wird, bildet sich als Nebenprodukt die Acetylverbindung des Trimethylindoleniumjodmethylates. Man kann die Farbstoffe auch nach dem Verfahren der DE-PS 585 186 durch Kondensation der Indolinverbindungen mit Formaldehyd zur Leukoverbindung und anschließende Oxidation mit Sauerstoff, Luft, Silberoxid, Silberacetat, Bleidioxid, Nitrosobenzol oder Chinonen, wie Naphthochinon, Chloranil oder Benzochinon, erhalten. Dieses Verfahren benötigt eine weitere Reaktionsstufe, außerdem wird die Kondensationslösung durch Reaktionsprodukte des Oxidationsmittels — im Falle von Chinon durch Hydroxychinon — verunreinigt.

Nach dem Verfahren der DE-PS 599 560 kondensiert man Methylenbasen des Indolins bzw. Cyclammoniumsalze schwacher Säuren mit Ameisensäure in Essigsäureanhydrid. Während Alkalisalze der Ameisensäure sich mit Essigsäureanhydrid umsetzen, läßt sich diese Reaktion bei der freien Ameisensäure nicht mit gleichen Maße beobachten. Außerdem führt die Verwendung reinen Essigsäureanhydrids zur teilweisen Acetylierung der Methylenbase des Indolins. Die Reaktion verläuft daher weniger einheitlich, und die Kondensationslösung läßt sich nicht unmittelbar zur stabilen Farbstofflösung verdünnen. Alle bisher beschriebenen Verfahren weisen somit Nachteile gegenüber dem erfindungsgemäßen Verfahren auf. Die Direktkondensation zur verkaufsfähigen Farbstofflösung hat darüberhinaus den Vorteil, daß bei diesem Herstellungsverfahren kein Abwasser anfällt.

## Beispiel 1

Man kühlt die Mischung von 200 g Eisessig und 200 g Essigsäureanhydrid auf 0 bis −6°C ab. Bei schwachexothermer Reaktion trägt man 93,2 g Natriumformiat ein. Hierbei steigt die Temperatur auf 2—6°C an. Es entsteht eine dünnflüssige Suspension, die sich bei längerem Nachrühren verdickt. Unmittelbar nach der Natriumformiatzugabe beginnt man bei 5°C mit dem Eindosieren von 200 g 1,3,3-Trimethyl-2-methylen-indolin bei einer Temperatur von 10—15°C. Sobald die Base eindosiert ist, wird die Solekühlung entfernt und der Ansatz 1 h nachgerührt, wobei sich die Mischung auf 20°C erwärmt. In einer weiteren Stunde erhitzt man auf 50—53°C und rührt bei dieser Temperatur 18 h weiter. Sollte der Gehalt an 1,3,3-Trimethyl-2-methylen-indolin noch über 1 % liegen, so wird die Schmelze bei 50—53°C weitere 5—10 h nachgerührt. Anschließend verdünnt man mit 150 ml Wasser und rührt 30 min bis zur Homogenisierung bei 50°C nach. Dann gibt man den Kondensationsansatz auf eine 35—40°C warme Lösung von 210 g 30%iger Salzsäure in 2,8 l Wasser. Nach Abkühlen auf Raumtemperatur salzt man mit 500 g Kochsalz den Farbstoff aus. Die Suspension wird 5 h bei Raumtemperatur nachgerührt, abfiltriert und mit einer Lösung von 15 g 30%iger Salzsäure und 90 g

Kochsalz in 850 ml Wasser gewaschen. Schließlich wäscht man den Preßkuchen mit der Lösung aus 850 ml Wasser und 95 g Kochsalz nach. Man erhält 229 g des Farbstoffs der Formel:

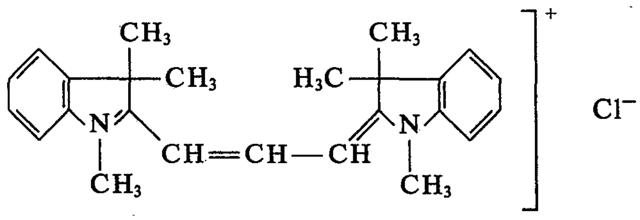

## Beispiel 2

Nach den Angaben des Beispiels 1 setzt man 93,2 g Natriumformiat und 200 g Essigsäureanhydrid in 200 g Eisessig mit 200 g 1,3,3-Trimethyl-2-methylen-indolin um. Sobald der Gehalt an 1,3,3-Trimethyl-2-methylen-indolin unter 1 % abgesunken ist, setzt man der Kondensationsschmelze bei 50°C 43 g Eisessig, 75 g Ethylenglykol, 11 g des Additionsproduktes von 40 mol Ethylenoxid an Oleylalkohol und 140 g Wasser zu. Man erhält eine stabile Farbstofflösung, deren Färbungen keine Farbtonabweichung gegenüber Färbungen zeigen, die mit kristallisiertem Farbstoff hergestellt wurden.

## Beispiel 3

Eine Mischung von 45 g Essigsäureanhydrid und 45 g Eisessig wird auf 10°C abgekühlt und dann portionsweise mit 21 g Natriumformiat versetzt. Anschließend trägt man 52,8 g 5-Methoxy-1,3,3-trimethyl-2-methylen-indolin innerhalb 1 h bei einer Temperatur unterhalb 10°C ein. Man läßt zunächst 1 h ohne Kühlung nachrühren, wobei die Temperatur bis auf 30°C ansteigt. Dann erwärmt man auf 50°C und läßt das Reaktionsgemisch 23 h bei 50°C rühren. Dann trägt man die Kondensationslösung auf 700 ml Wasser von 70°C aus, läßt 3 h nachrühren und salzt dann den Farbstoff mit 105 g Kochsalz aus. Die Farbstoffsuspension läßt man über Nacht rühren, saugt den Farbstoff ab, wäscht ihn mit 200 ml 20%iger Kochsalzlösung und trocknet ihn. Man erhält 50,8 g des Farbstoffes der Formel:

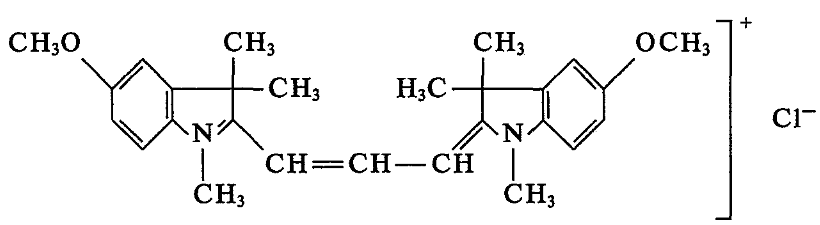

der Polyacrylnitrilfasern in einem klaren blaustichigen Rot anfärbt.

## Beispiel 4

Eine Mischung von 45 g Essigsäureanhydrid und 45 g Eisessig wird auf 10°C abgekühlt und portionsweise mit 21 g Natriumformiat versetzt. Dann tropft man bei einer Temperatur unterhalb 10°C 54,1 g 5-Chlor-1,3,3-trimethyl-2-methylen-indolin innerhalb von 1 – 2 h ein. Man läßt das Reaktionsgemisch 1 h ohne Kühlung nachrühren, wobei die Temperatur auf 30°C ansteigt. Dann erwärmt man auf 50°C und rührt bei dieser Temperatur während 23 h nach. Die Farbstoffschmelze wird anschließend auf 700 ml auf 70°C erwärmtes Wasser ausgetragen und einige Stunden nachgerührt, bis die Farbstoffsuspension Raumtemperatur erreicht hat. Der Farbstoff kristallisiert in sehr reiner Form aus. Man erhält 66,8 g des Farbstoffes der Formel:

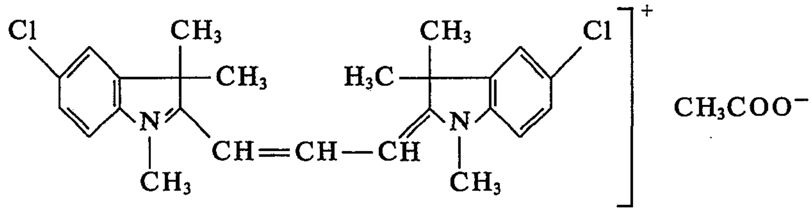

der Polyacrylnitrilmaterialien in einem klaren Rosa anfärbt.

Beispiel 5

45 g Essigsäureanhydrid werden mit 45 g Eisessig vermischt und auf 10°C abgekühlt. Bei dieser Temperatur trägt man 21 g Natriumformiat ein. Nachdem sich im Reaktionsgemisch ein dicker Brei gebildet hat, gibt man 60,2 g frisch destilliertes 5-Carbomethoxy-1,3,3-trimethyl-2-methylen-indolin bei einer Temperatur unter 10°C zu. Man läßt 1 h ohne Kühlung nachrühren, wobei die Temperatur bis auf 28°C ansteigt. Dann erwärmt man auf 50°C und läßt die Reaktionsmischung 23 h bei 50°C rühren. Dann trägt man den Ansatz auf 700 ml Wasser aus, salzt den Farbstoff mit 70 g Kochsalz aus, läßt die Farbstoffsuspension über Nacht rühren, saugt den Farbstoff ab und wäscht ihn mit 250 ml 10%iger Kochsalzlösung. Nach Trocknen im Vakuum erhält man den Trimethinfarbstoff der Formel:

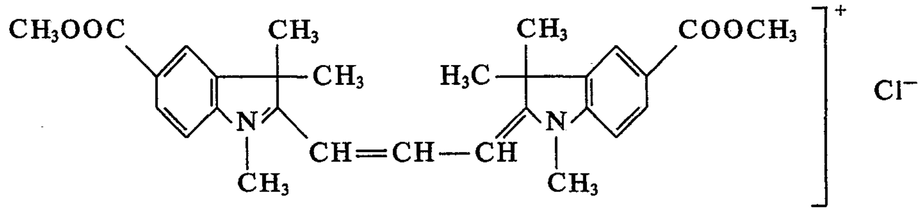

der Polyacrylnitrilfasern in einem klaren Rosa anfärbt.

**Patentansprüche**

1. Verfahren zur Herstellung von Trimethinfarbstoffen der allgemeinen Formel

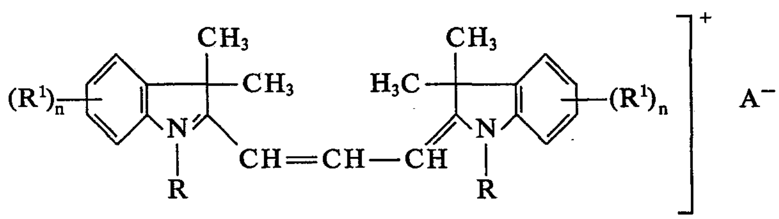

worin

R für einen $C_1$- bis $C_4$-Alkylrest,
$R^1$ für Wasserstoff, $C_1$- bis $C_4$-Alkyl, Benzyl, Cyclohexyl, $C_1$- bis $C_4$-Alkoxy, Benzyloxy, Phenoxy, Halogen, Trifluormethyl, Acetylamino, Carbonsäure-$C_1$- bis -$C_4$-alkylester, gegebenenfalls durch $C_1$- bis $C_4$-Alkyl und/oder Phenyl substituiertes Carbonamid, $C_1$- bis $C_4$-Alkylsulfonyl, Phenylsulfonyl, Cyan, Nitro, Benzoxazol-2-yl, Benzimidazol-2-yl, Benzthiazol-2-yl oder gegebenenfalls durch $C_1$- bis $C_4$-Alkyl mono- oder disubstituiertes Sulfonamid oder
zwei Reste $R^1$ für einen annellierten Benzolring stehen,
n 1 bis 4 und
$A^-$ einen anionischen Rest bedeuten, und worin die aliphatischen und aromatischen Reste weitere nichtionische Reste tragen können,

dadurch gekennzeichnet, daß man ein Alkalisalz der Ameisensäure zunächst mit einem Gemisch aus Essigsäure und Essigsäureanhydrid im Gewichtsverhältnis 40 : 60 bis 60 : 40 zur Umsetzung bringt und dann mit Indolinverbindungen der allgemeinen Formel

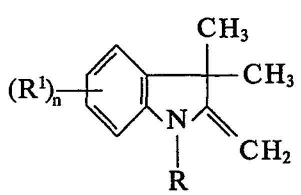

in welcher

R, $R^1$ und n die oben angegebene Bedeutung haben,

umsetzt.

2. Verfahren nach Anspruch 1, dadurch gekennzeichnet, daß man als Indolinverbindungen solche der allgemeinen Formel

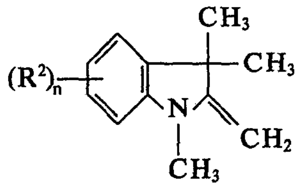

worin

$R^2$ für Wasserstoff, Chlor, Methyl, Methoxy oder Ethoxy steht,

verwendet.

3. Verfahren gemäß Anspruch 1, dadurch gekennzeichnet, daß man die Umsetzung bei 40–80°C während 10–30 h durchführt.

4. Verfahren gemäß Anspruch 1, dadurch gekennzeichnet, daß man zur Herstellung stabiler Farbstofflösungen nach beendeter Kondensation durch Zusatz von Wasser das restliche Essigsäureanhydrid zerstört.

## Claims

1. A process for the preparation of trimethine dyestuffs of the general formula

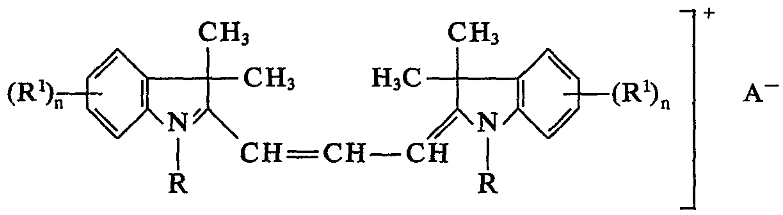

wherein

R represents a $C_1$- to $C_4$-alkyl radical,
$R^1$ represents hydrogen, $C_1$- to $C_4$-alkyl, benzyl, cyclohexyl, $C_1$- to $C_4$-alkoxy, benzyloxy, phenoxy, halogen, trifluoromethyl, acetylamino, carboxylic acid $C_1$- to $C_4$-alkyl esters, carbonamide which may be substituted by $C_1$- to $C_4$-alkyl and/or phenyl, $C_1$- to $C_4$-alkylsulphonyl, phenylsulphonyl, cyano, nitro, benzoxazol-2-yl, benzimidazol-2-yl, benzthiazol-2-yl or sulphonamide which may be monosubstituted or disubstituted by $C_1$- to $C_4$-alkyl, or two radicals $R^1$ represent a fused benzene ring,
n denotes 1 to 4 and
$A^-$ denotes an anionic radical,

and wherein the aliphatic and aromatic radicals can carry further nonionic radicals, characterised in that first an alkali me tal salt of formic acid is reacted with a mixture of acetic acid and acetic anhydride in a ratio by weight of 40:60 to 60:40, and then the product is reacted with indoline compounds of the general formula

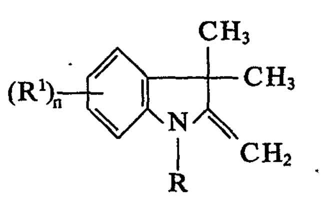

in which

R, $R^1$ and n have the abovementioned meaning.

2. A process according to Claim 1, characterised in that the indoline compounds used are those of the general formula

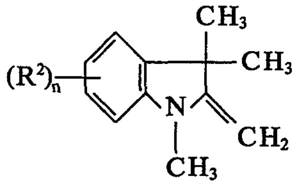

wherein

$R^2$ represents hydrogen, chlorine, methyl, methoxy or ethoxy.

3. A process according to Claim 1, characterised in that the reaction is carried out at 40–80°C for 10–30 hours.

4. A process according to Claim 1, characterised in that to prepare stable dyestuff solutions, residual acetic anhydride is destroyed, after the condensation is complete, by the addition of water.

**Revendications**

1. Procédé de production de colorants triméthiniques de formule générale

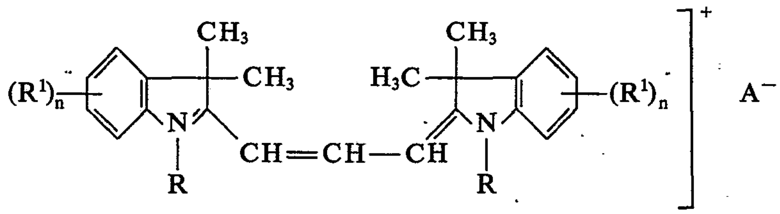

dans laquelle

R est un reste alkyle en $C_1$ à $C_4$,
$R^1$ représente l'hydrogène, un reste alkyle en $C_1$ à $C_4$, benzyle, cyclohexyle, alkoxy en $C_1$ à $C_4$, benzyloxy, phénoxy, halogéno, trifluorométhyle, acétylamino, ester alkylique en $C_1$ à $C_4$ d'acide carboxylique, carboxamide, éventuellement substitué par un radical alkyle en $C_1$ à $C_4$ et/ou un radical phényle, alkylsulfonyle en $C_1$ à $C_4$, phénylsulfonyle, cyano, nitro, benzoxazole-2-yle, benzimidazole-2-yle, benzothiazole-2-yle ou sulfamido éventuellement monosubstitué ou disubstitué par un radical alkyle en $C_1$ à $C_4$, ou bien
deux restes $R^1$ forment un noyau benzénique condensé,
n a une valeur de 1 à 4 et
$A^-$ désigne un reste anionique, et

les restes aliphatiques et aromatiques peuvent porter d'autres restes non ioniques, caractérisé en ce qu'on met en réaction un sel alcalin de l'acide formique tout d'abord avec un mélange d'acide acétique et d'anhydride acétique dans un rapport en poids de 40:60 à 60:40, puis on le fait réagir avec des composés d'indoline de formule générale

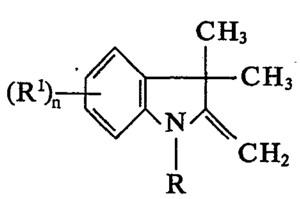

dans laquelle

R, $R^1$ et n ont la définition indiquée ci-dessus.

2. Procédé suivant la revendication 1, caractérisé en ce qu'on utilise comme composés d'indoline des

composés de formule générale

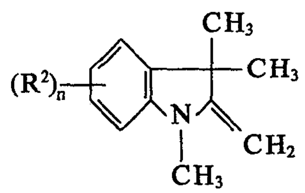

dans laquelle

$R^2$ représente l'hydrogène, le chlore, un groupe méthyle, méthoxy ou éthoxy.

3. Procédé suivant la revendication 1, caractérisé en ce qu'on conduit la réaction à 40 – 80°C pendant 10 à 30 heures.

4. Procédé suivant la revendication 1, caractérisé en ce qu'on détruit l'anhydride acétique restant par addition d'eau une fois la condensation terminée, pour obtenir des solutions stables de colorants.